# EUROPÄISCHE PATENTSCHRIFT

(11) **EP 3 981 716 B1**
(45) Veröffentlichungstag und Bekanntmachung des Hinweises auf die Patenterteilung: **01.05.2024**
(21) Anmeldenummer: 21201654.7
(22) Anmeldetag: 08.10.2021
(51) Int. Cl.: B65G 47/84, B65G 29/00

(54) **VORRICHTUNG UND VERFAHREN ZUM TRANSPORTIEREN VON BEHÄLTERN**
METHOD AND DEVICE FOR TRANSPORTING CONTAINERS
DISPOSITIF ET PROCÉDÉ DE TRANSPORT DE RÉCIPIENTS

(30) Priorität: 09.10.2020 DE 102020126596
(43) Veröffentlichungstag der Anmeldung: 13.04.2022
(73) Patentinhaber: KRONES AG, 93073 Neutraubling (DE)
(72) Erfinder: Leidel, Marco, 93073 Neutraubling (DE)
(74) Vertreter: Nordmeyer, Philipp Werner

(56) Entgegenhaltungen:
- WO-A1-2019/041702
- DE-A1-102013 104 082
- DE-T2- 60 114 777

## Beschreibung

### Technisches Gebiet

Die vorliegende Erfindung betrifft eine Vorrichtung und ein Verfahren zum Transportieren von Behältern, vorzugsweise in einer Getränkeabfüllanlage, wobei die Vorrichtung ein Transportrad mit zumindest einem verstellbaren Aufnahmebereich für einen Behälter aufweist.

### Stand der Technik

Bei Getränkeabfüllanlagen in Rundläuferbauweise mit einer Abfolge von nacheinander geschalteten Karussellen werden die zu behandelnden Behälter zwischen den Karussellen, in denen die Behälter einer Behandlung unterzogen werden, üblicherweise mittels Transfersternen transportiert. Beispielsweise werden zu befüllende Behälter in einem Füllerkarussell mit einem Füllprodukt befüllt und anschließend in einem nachgelagerten Verschließerkarussell verschlossen. Der Transfer der befüllten Behälter zwischen dem Füllerkarussell und dem Verschließerkarussell findet zumeist mittels eines oder mehrerer Transfersterne statt.

Der Transferstern weist zu diesem Zweck zumeist mehrere Taschen auf, die zur Aufnahme je eines Behälters ausgelegt sind. Durch Rotation des Transfersterns wird der Behälter, gehalten durch die entsprechende Tasche und eine etwaige Außenführung, entlang eines Teilkreises des Transfersterns befördert.

Die Taschengröße kann fest vorgegeben sein, wobei in diesem Fall der Transferstern nur für eine spezifische Behältergröße und/oder Behälterform anwendbar ist. Ein Wechsel auf ein anderes Behälterformat ist in einer solchen Anlage nicht ohne weiteres möglich und mit hohen Anschaffungskosten und einem hohen Arbeitsaufwand zur Umrüstung der Anlage verbunden.

Aus diesem Grund wurden Transfersterne mit veränderlicher Taschengröße entwickelt, vgl. beispielsweise EP 2 447 194 A1 DE 694 05 650 T2, DE 601 14 777 T2 und WO 2019/041702 A1. Die Taschen werden hierbei durch Ausnehmungen mehrerer übereinanderliegender Scheiben gebildet, die gegeneinander verstellbar bzw. drehbar sind, wodurch die Taschen je nach Bedarf vergrößert oder verkleinert werden können. Als wichtig wird im Stand der Technik angesehen, dass die Verstellung so erfolgt, dass die Position der Taschen in Umfangsrichtung des Transfersterns, d.h. ebenso die Position eines hypothetisch eingesetzten Behälters, sowie die Teilung zwischen den Taschen bei der Verstellung unverändert bleiben. Andernfalls könnten die Synchronität zu vorund/oder nachgelagerten Transfersternen oder Karussellen sowie die Relativpositionen zu etwaigen weiteren Aufnahmeabschnitten beispielsweise zur Halterung von Halsbereichen der Behälter verloren gehen.

Die Verstellung der Taschengröße unter Beibehaltung der Taschenposition in Umfangsrichtung und unter Beibehaltung der Teilung zwischen benachbarten Taschen wird in dem genannten Stand der Technik dadurch erreicht, dass die die Taschen ausbildenden Scheiben bei der Verstellung winkelsymmetrisch in entgegengesetzte Richtungen gedreht werden. Ein Nachteil dieser Methode besteht in der vergleichsweise komplexen Mechanik. So muss die Rotation einer Spindel, manuell betätigt oder über einen Aktuator wie etwa einen Servomotor, über einen Mechanismus in eine scherenartige Bewegung der Scheiben umgewandelt werden. Die Zuverlässigkeit der Verstellung kann jedoch durch eine etwaige Selbsthemmung des Mechanismus zur Scherenumlenkung beeinträchtigt sein. Ferner stehen die komplexe Mechanik und die damit einhergehenden Toleranzen einer exakten Einstellung der Taschen auf unterschiedliche Behälterformate entgegen.

Die DE 10 2013 104 082 A1, in der die Merkmale des Oberbegriffs von Anspruch 1 enthalten sind, beschreibt eine Transportvorrichtung für Behälter mit zwei Transportsternelementen.

### Darstellung der Erfindung

Eine Aufgabe der vorliegenden Erfindung besteht darin, den Transport von Behältern weiter zu verbessern, insbesondere eine Vorrichtung, die für den Transport von Behältern unterschiedlicher Formate geeignet ist, mit einer verbesserten Zuverlässigkeit anzugeben.

Die Aufgabe wird durch eine Vorrichtung mit den Merkmalen des Anspruchs 1 sowie ein Verfahren mit den Merkmalen des nebengeordneten Verfahrensanspruchs gelöst. Vorteilhafte Weiterbildungen folgen aus den Unteransprüchen, der folgenden Darstellung der Erfindung sowie der Beschreibung bevorzugter Ausführungsbeispiele.

Die Vorrichtung dient zum Transportieren von Behältern, und sie kommt besonders bevorzugt in einer Getränkeabfüllanlage zur Anwendung, so etwa zum Abfüllen von Wasser (still oder karbonisiert), Softdrinks, Bier, Wein, Saft, Smoothies, Milchprodukten, Mischgetränken und dergleichen.

Die Vorrichtung ist in Rundläuferbauweise ausgeführt und weist dazu ein Transportrad mit einer zentralen Anbindung auf, die eingerichtet ist, um das Transportrad an einer zentralen Drehwelle, die eine Drehachse aufweist, zu befestigen, so dass eine Drehung der zentralen Drehwelle um deren Drehachse auf das Transportrad übertragbar ist. Die Vorrichtung weist ferner mehrere Scheiben auf, die konzentrisch bezüglich der Drehachse in Axialrichtung übereinandergestapelt sind und jeweils zumindest eine Ausnehmung aufweisen, die gemeinsam einen Aufnahmebereich, der an einem Außenumfang des Transportrads vorgesehen und zur zumindest teilweisen Aufnahme eines Behälters eingerichtet ist, ausbilden. Der eine oder die mehreren Aufnahmebereiche sind beispielsweise Ausnehmungen, Vertiefungen, Taschen oder dergleichen, um je einen Behälter, vorzugsweise einen Grundkörper desselben wie beispielsweise einen Flaschenkörper, zumindest teilweise zu halten. Durch Rotation des Transportrads können die Behälter somit entlang einer kreisförmigen Bahn transportiert werden. In diesem Sinne fungieren die Aufnahmebereiche auch als Führungsbereiche, wobei die Behälter gegebenenfalls von einer stationären Außenführung radial nach innen gestützt bzw. geführt werden können.

Es sei darauf hingewiesen, dass Bezeichnungen wie "Aufnahmebereich", "Ausnehmung", "Behälter" und andere der sprachlichen Einfachheit halber oft im Singular verwendet werden. Der Plural ist jedoch mitumfasst, sofern dieser nicht technisch oder ausdrücklich ausgeschlossen ist. So weist das Transportrad üblicherweise eine Vielzahl von Aufnahmebereichen auf, um mehrere Behälter gleichzeitig transportieren zu können.

Erfindungsgemäß ist zumindest eine der Scheiben eine Festscheibe, die über eine Stützstruktur relativ zur Anbindung fixiert ist, und zumindest eine der Scheiben eine Verstellscheibe, die um die Drehachse relativ zur Festscheibe drehbar gelagert ist. Das Transportrad weist ferner einen Verstellmechanismus auf, der eingerichtet ist, um die Verstellscheibe um einen Verstellwinkel relativ zur Festscheibe zu drehen, wodurch die Größe des Aufnahmebereichs veränderbar ist. Die Verstellscheibe ist über den Verstellmechanismus somit zumindest um einen maximalen Verstellwinkel, der beispielsweise der maximalen Größe des Aufnahmebereichs entspricht, drehbar gelagert.

Indem zur Einstellung der Größe des Aufnahmebereichs über den Verstellmechanismus eine oder mehrere Verstellscheiben relativ zu einer oder mehreren Festscheiben verdreht werden, kann die Mechanik zur Verstellung deutlich vereinfacht werden. Eine scherenartige mechanische Umlenkung der dem Verstellmechanismus bereitgestellten Kraft ist nicht länger erforderlich. Mit der Reduktion der mechanischen Komplexität gehen eine Verbesserung der Zuverlässigkeit und der Genauigkeit der Einstellung sowie eine Kostenersparnis durch weniger Komponenten einher. Die Montage der Vorrichtung vereinfacht sich.

Gemäß der Erfindung umfasst das Transportrad genau drei Scheiben, wobei zwei davon Festscheiben sind und eine der Scheiben eine Verstellscheibe ist, die in Axialrichtung der Drehachse gesehen zwischen den beiden Festscheiben angeordnet ist. In anderen Worten, die Verstellscheibe ist sandwichartig zwischen den beiden Festscheiben vorgesehen, wodurch der Aufnahmebereich durch insgesamt drei Ausnehmungen ausgebildet wird. Die Wandungen der axial äußeren Ausnehmungen der beiden Festscheiben stabilisieren den Behälter, so dass er durch die Einwirkung der Wandung der mittleren Ausnehmung der Verstellscheibe von der anderen Seite nicht kippen kann. Ferner ist nur eine einzige Scheibe zu verstellen, um den Aufnahmebereich an unterschiedliche Behälterformate anzupassen. Der Behälter kann so durch einen geringen maschinenbaulichen Aufwand sicher und zuverlässig gehalten und transportiert werden.

In einer Alternative können auch zwei Verstellscheiben und eine Festscheibe vorgesehen sein.

Vorzugsweise weisen die Scheiben eine gleiche Anzahl an Ausnehmungen auf, um die Aufnahmebereiche auf wohldefinierte Weise auszubilden. Zusätzlich oder alternativ können die Ausnehmungen in einem konstanten Winkelabstand angeordnet sein und/oder dieselbe Form aufweisen, wodurch sich Herstellung, Montage und Betrieb der Vorrichtung vereinfachen. Die Ausnehmungen können beispielsweise halbkreisförmige Taschen, d.h. Vertiefungen relativ zum Außenumfang, sein. In diesem Fall entsprechen die maximale Größe und Form des Aufnahmebereichs der Größe und Form der den Aufnahmebereich bildenden Ausnehmungen. Die maximale Größe könnte hier durch den Radius oder Durchmesser der halbkreisförmigen Ausnehmungen angegeben werden.

Vorzugsweise weist der Verstellmechanismus einen rotatorischen Verstellaktuator auf, der fest an der Stützstruktur montiert ist, wobei der Verstellaktuator einen Elektromotor mit einer Ausgabewelle umfasst, der die Kontrolle der Winkelposition der Ausgabewelle erlaubt. Auf diese Weise kann der Verstellwinkel ohne hohen mechanischen Aufwand zuverlässig und präzise eingestellt werden. Der Elektromotor ist beispielsweise ein Schrittmotor, Servomotor oder Torquemotor, wobei ein Schrittmotor in der vorliegenden Anwendung besonders bevorzugt ist.

Der Verstellaktuator wird vorzugsweise über einen Schleifring mit Strom versorgt, der über dem Transportrad sitzen kann. Der Verstellaktuator ist besonders bevorzugt als Servomotor realisiert oder umfasst einen solchen, der eine gewünschte Winkelposition ohne Referenzfahrt wiederfindet bzw. einstellen kann. Der Verstellaktuator ist vorzugsweise ohne Einhausung auf dem Transportrad, insbesondere an der Stützstruktur befestigt. Vorzugsweise sind der Verstellaktuator sowie die beteiligten Komponenten des Verstellmechanismus gegenüber den eingesetzten Medien in der Vorrichtung beständig. Über das Ritzel an der Ausgabewelle Zahnrad und die Zahnstange am Transportrad findet die Verstellung und die Generierung des Gegenmoments statt.

Vorzugsweise ist im Transportrad ein Pneumatikzylinder vorgesehen, der eingerichtet ist, um abzusichern, insbesondere im Fall größerer Kräfte, dass keine unerwünschte Verstellung am Transportrad auftritt. Eine solche Verstellsicherung, die in den Figuren nicht gezeigt ist, kann auch auf andere Weise realisiert sein und ist insbesondere im Fall hoher Geschwindigkeiten und/oder großer Behälter, beispielsweise Flaschen über 1,25 L, nützlich.

Vorzugsweise weist der Verstellmechanismus ein Ritzel, das fest mit der Ausgabewelle des rotatorischen Verstellaktuators verbunden und über diese in Drehung versetzbar ist, sowie eine Zahnstange auf, die mit dem Ritzel in Zahneingriff steht und durch Drehung des Ritzels translatorisch, vorzugsweise entlang eines Kreisbogens, bewegbar ist, wobei die Zahnstange fest an der Verstellscheibe montiert ist. Auf diese Weise ist die Verstellscheibe über einen maschinenbaulich einfachen und zuverlässigen Verstellmechanismus relativ zu den Festscheiben um einen bestimmten Verstellwinkel verstellbar/verdrehbar.

Der Abstand zwischen benachbarten Aufnahmebereichen sei hierin als "Teilung" bezeichnet. Die Teilung kann beispielsweise als Winkelabstand oder Bogenlänge gemessen bzw. angegeben werden. Dadurch, dass zur Einstellung der Taschengröße, d.h. insbesondere der Abmessung der Aufnahmebereiche in Umfangsrichtung, die Verstellscheiben relativ zu den Festscheiben verdreht werden, verschiebt sich die radiale Symmetrielinie der Aufnahmebereiche, sofern eine solche vorhanden ist. In anderen Worten, die Position der Aufnahmebereiche und somit die Position eines aufgenommenen Behälters, d.h. seine Zylinderachse im Fall eines zylindrischen Behälters, verschiebt sich bei der Verstellung in Umfangsrichtung. Diese Verschiebung sei hierin auch als "Teilungsversatz" bezeichnet. Der "Teilungsversatz" ist auch im Fall nur eines einzigen Aufnahmebereichs wohldefiniert, da er die relative Verschiebung eines Aufnahmebereichs bezeichnet, nicht jedoch den Abstand zwischen benachbarten Aufnahmebereichen.

Vorzugsweise ist das Transportrad so eingerichtet, dass ein durch Drehung der Verstellscheibe um den Verstellwinkel relativ zur Festscheibe verursachter Teilungsversatz manuell und/oder automatisch kompensierbar ist. In anderen Worten, das Transportrad erlaubt eine Korrektur des Teilungsversatzes. Indem zur Einstellung der Größe des Aufnahmebereichs eine oder mehrere Verstellscheiben relativ zu einer oder mehreren Festscheiben verdreht werden und ferner eine Korrektur des Teilungsversatzes durchgeführt wird, kann nicht nur die Mechanik zur Verstellung deutlich vereinfacht werden, sondern die Position der Aufnahmebereiche relativ zu anderen Vorrichtungen oder Komponenten sowie die Teilung zwischen den Aufnahmebereichen bleiben unverändert. Auf diese Weise kann ohne weitere Nacharbeit die Synchronität zu vor- und/oder nachgelagerten Transfersternen oder Karussellen sowie Relativpositionen zu etwaigen weiteren Aufnahmeabschnitten, beispielsweise zur Halterung von Halsbereichen der Behälter, beibehalten werden.

Es sei darauf hingewiesen, dass die Kompensation des Teilungsversatzes vor und/oder während und/oder nach der Verstellung der Verstellscheibe relativ zur Festscheibe durchführbar ist. Die Kompensation bedeutet vorzugsweise, dass das Transportrad insgesamt, d.h. inklusive aller Scheiben, in einer dem Verstellwinkel entgegengesetzten Richtung um einen bestimmten Korrekturwinkel gedreht wird. Der Betrag des Korrekturwinkels kann dabei gleich dem Betrag des Verstellwinkels sein; es ist jedoch auch möglich, dass die Korrektur in Abhängigkeit der zu transportierenden Behälter und/oder von Prozess- und/oder Maschinenparametern davon abweicht.

Vorzugsweise weist die Vorrichtung ferner einen Antrieb auf, der eingerichtet ist, um die zentrale Drehwelle in Rotation zu versetzen. Der Antrieb ist hierbei ein Elektromotor oder umfasst einen solchen, der die Kontrolle der Winkelposition der zentralen Drehwelle erlaubt. Insbesondere kommt ein Schrittmotor, Servomotor oder Torquemotor, besonders bevorzugt ein Schrittmotor, in Betracht. Der Antrieb bildet somit einen Hauptantrieb, der das Transportrad für den Transport der Behälter als Ganzes in Rotation versetzt.

Der Antrieb kann eingerichtet sein, um den Teilungsversatz zu kompensieren. Der Antrieb fungiert gemäß dieser besonders bevorzugten Ausführungsform nicht nur als Hauptantrieb, sondern er übernimmt synergetisch auch die Funktion zur Kompensation des Teilungsversatzes, wodurch die Vorrichtung auf maschinenbaulich besonders einfache und zuverlässige Weise realisierbar ist.

Vorzugsweise weist die Vorrichtung eine Steuerung auf, die mit dem Antrieb sowie dem Verstellmechanismus in Kommunikation steht und eingerichtet ist, um den Verstellmechanismus so anzusteuern, dass die Verstellscheibe um den Verstellwinkel relativ zur Festscheibe gedreht wird, und um den Antrieb so anzusteuern, dass der dadurch verursachte Teilungsversatz kompensiert wird. Die Steuerung kommuniziert drahtlos oder drahtgebunden mit den entsprechenden Komponenten und kann eine programmierbare, rechnergestützte Einrichtung sein. Die Steuerung kann als zentrale oder dezentrale Recheneinheit implementiert sein, sie kann autark arbeiten oder Teil einer Prozesssteuerung sein, auf cloudbasierte oder internetbasierte Anwendungen zurückgreifen usw..

Vorzugsweise ist die Steuerung eingerichtet, um aus dem Verstellwinkel einen Korrekturwinkel zu ermitteln und den Antrieb so anzusteuern, dass die Position des Aufnahmebereichs am Außenumfang um den Korrekturwinkel korrigiert wird. Der Korrekturwinkel kann in Abhängigkeit eines oder mehrerer Prozess- und/oder Maschinenparameter und/oder behälterabhängiger Parameter ermittelt, beispielsweise berechnet oder einer Tabelle entnommen werden. Vorzugsweise ist die Steuerung eingerichtet, um eine Eingabe über den Verstellwinkel zu empfangen oder diesen zu ermitteln, beispielsweise aus den genannten Prozess- und/oder Maschinenparametern und/oder behälterabhängigen Parametern, und den Verstellmechanismus entsprechend anzusteuern, so dass die Verstellscheibe um den Verstellwinkel relativ zur Festscheibe gedreht wird. Auf diese Weise ist der Teilungsversatz vollautomatisch kompensierbar. Die oben genannte Aufgabe wird ferner durch ein Verfahren zum Transportieren von Behältern, vorzugsweise in einer Getränkeabfüllanlage, gelöst. Das Verfahren wendet eine Vorrichtung bzw. ein Transportrad gemäß einer der vorstehend dargelegten Ausführungsvarianten an. Das Verfahren weist auf: Übergeben eines Behälters an den Aufnahmebereich des Transportrads, Transportieren des Behälters entlang einer Kreisbahn durch Drehen des Transportrads um die zentrale Drehachse und Entnehmen des Behälters aus dem Aufnahmebereich; Drehen der Verstellscheibe um einen Verstellwinkel relativ zur Festscheibe, um die Größe des Aufnahmebereichs zu verändern. Die Schritte des Transports und der Verstellung können in beliebiger Abfolge und Reihenfolge durchgeführt werden.

Die Merkmale, technischen Wirkungen, Vorteile sowie Ausführungsbeispiele, die in Bezug auf die Vorrichtung und das Transportrad beschrieben wurden, gelten analog für das Verfahren.

So wird ein durch Drehung der Verstellscheibe um den Verstellwinkel relativ zur Festscheibe verursachter Teilungsversatz aus den oben genannten Gründen vorzugsweise manuell und/oder automatisch kompensiert, insbesondere indem das Transportrad insgesamt in einer dem Verstellwinkel entgegengesetzten Richtung um einen Korrekturwinkel gedreht wird.

Vorzugsweise wird die Kompensation des Teilungsversatzes aus den oben genannten Gründen über den Antrieb durchgeführt, insbesondere indem das Transportrad insgesamt von dem Antrieb in einer dem Verstellwinkel entgegengesetzten Richtung um einen Korrekturwinkel gedreht wird. Weitere Vorteile und Merkmale der vorliegenden Erfindung sind aus der folgenden Beschreibung bevorzugter Ausführungsbeispiele ersichtlich.

Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine Draufsicht auf ein Transportrad einer Vorrichtung zum Transportieren von Behältern;
- Figur 2: einen Ausschnitt des Transportrads der Vorrichtung zum Transportieren von Behältern von unten gesehen; und
- Figur 3: eine Seitenansicht des Transportrads der Vorrichtung zum Transportieren von Behältern.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanz zu vermeiden.

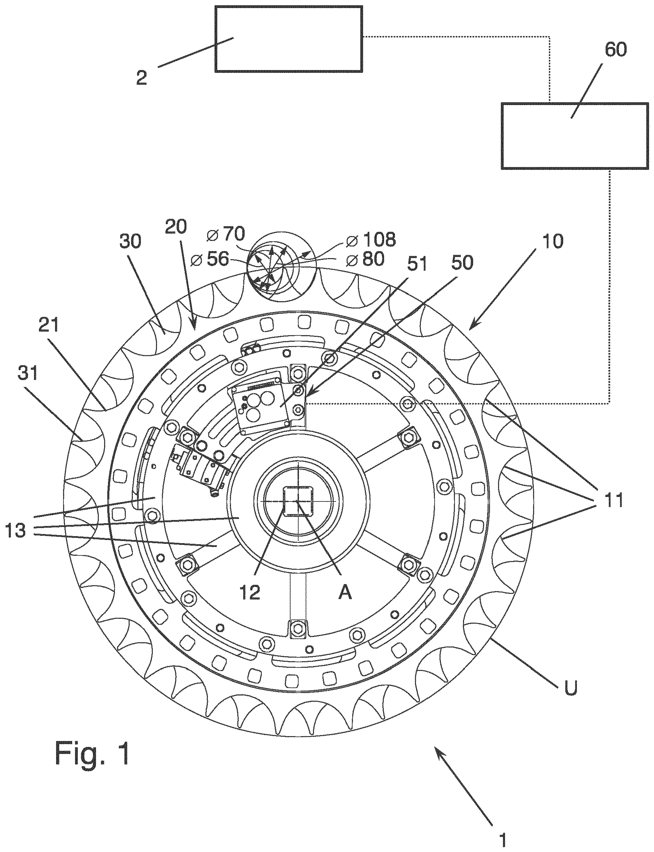

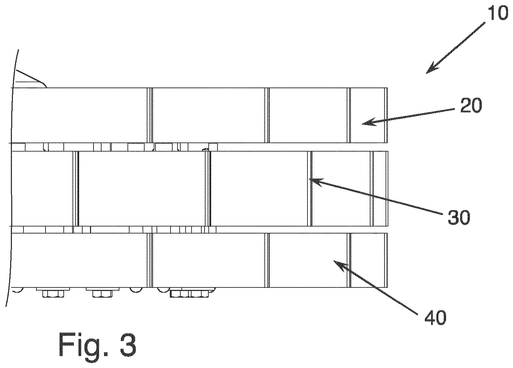

Die Figuren 1 bis 3 zeigen eine Vorrichtung 1 zum Transportieren von Behältern, die in den Figuren nicht dargestellt sind, aus unterschiedlichen Perspektiven.

Die Vorrichtung 1, auch als "Transferstern" bezeichnet, kommt vorzugsweise in einer Behälterbehandlungsanlage zur Anwendung und dient darin dem Transport der Behälter, beispielsweise von einer Behandlungsstation zu einer nächsten Behandlungsstation. Es kann auf diese Weise eine Übergabe der Behälter zwischen Behandlungskarussells (in den Figuren nicht gezeigt), die unterschiedliche Behandlungsmöglichkeiten bereitstellen, erreicht werden. Das jeweilige Behandlungskarussell kann beispielsweise eine oder mehrere der folgenden Behandlungsmöglichkeiten bereitstellen: Befüllen der Behälter mit einem Füllprodukt, Verschließen der befüllten Behälter jeweils mit einem Verschluss, Verschwenken, Rotieren, Etikettieren, Schrumpfen, Blasen, Streckblasen, Öffnen, Domabschneiden, Reinigen, Sterilisieren, Aktivieren, Rinsen (gasförmig und/oder flüssig), Überschwallen, Erwärmen, Erhitzen, Kühlen, Ausblasen, Abflammen, Entfernen elektrostatischer Aufladung, Vorfüllen, Fertigfüllen, Vorverschließen mit Vorverschluss, Aufsetzen eines ersten Verschlussteils und/oder Aufsetzen eines zweiten Verschlussteils. Besonders bevorzugt kommt die Vorrichtung 1 in einer Getränkeabfüllanlage zur Anwendung, beispielsweise zum Abfüllen von Wasser (still oder karbonisiert), Softdrinks, Bier, Wein, Saft, Smoothies, Milchprodukten, Mischgetränken und dergleichen.

In der Behälterbehandlungsanlage können auch mehrere Vorrichtungen 1 hintereinander angeordnet sein, wodurch ein schlangenförmiger Transportpfad, beispielsweise zwischen zwei Behälterbehandlungskarussells, ausgebildet wird.

Die Vorrichtung 1 weist ein Transportrad 10 auf, an dessen Außenumfang U mehrere Aufnahmebereiche 11 vorgesehen sind, die zum Aufnehmen von Behältern eingerichtet sind. Die Aufnahmebereiche 11 sind Ausnehmungen, Vertiefungen, Taschen oder dergleichen, um je einen Behälter, vorzugsweise einen Grundkörper desselben wie beispielsweise Flaschenkörper, zumindest teilweise zu umfassen. Durch Rotation des Transportrads 10 werden die Behälter somit entlang einer kreisförmigen Bahn transportiert. Damit sind die Aufnahmebereiche 11 auch Führungsbereiche, wobei die Behälter gegebenenfalls von einer in den Figuren nicht dargestellten stationären Außenführung radial nach innen gestützt bzw. geführt werden können, damit die Behälter während des Transports sicher in den Aufnahmebereichen 11 verbleiben und sich nicht herausbewegen.

Das Transportrad 10 steht über eine zentrale Anbindung 12 mit einer zentralen Drehwelle (in den Figuren nicht gezeigt) in fester Verbindung, so dass eine Rotation der zentralen Drehwelle um die eigene Drehachse A auf das Transportrad 10 übertragen wird. Das Transportrad 10 ist vorzugsweise in der Höhe, d.h. in axialer Richtung, verstellbar. Die zentrale Drehwelle wird über einen Antrieb 2, der in der Figur 1 schematisch dargestellt ist, in Rotation versetzt. Der Antrieb 2 ist vorzugsweise ein Elektromotor, der die Kontrolle der Winkelposition erlaubt, wie etwa ein Schrittmotor, Servomotor oder Torquemotor.

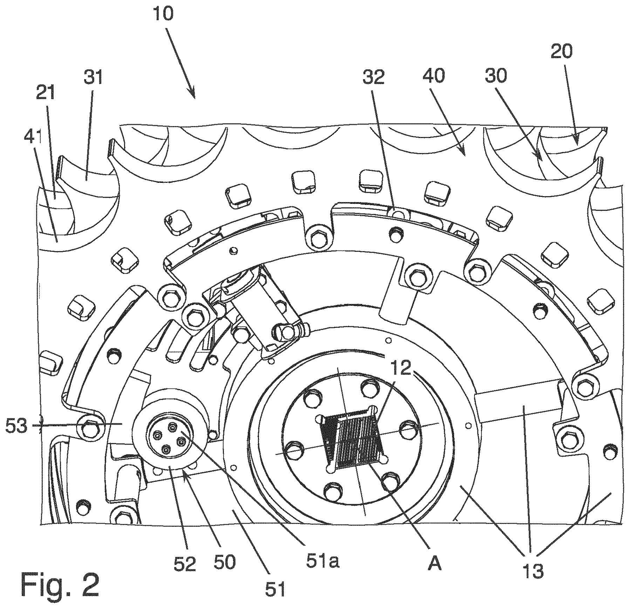

Das Transportrad 10 umfasst mehrere, im vorliegenden Ausführungsbeispiel drei, Scheiben 20, 30, 40, die vorzugsweise den gleichen Außenumfang U aufweisen, konzentrisch bezüglich ein und derselben Drehachse A in Axialrichtung übereinandergestapelt sind. Das Transportrad 10 weist ferner eine Stützstruktur 13 auf, die wie in den Figuren 1 und 2 gezeigt speichenartig ausgebildet sein kann und eingerichtet ist, um die Scheiben 20, 30, 40 so mit der Anbindung 12 zu verbinden, dass die Rotation der zentralen Drehwelle auf die Scheiben 20, 30, 40 als Ganzes übertragbar ist.

Die Scheiben 20, 30, 40 weisen bezüglich des Außenumfangs U jeweils mehrere Ausnehmungen 21, 31, 41 auf, die in Zusammenwirkung die Aufnahmebereiche 11 ausbilden. In anderen Worten, je eine Ausnehmung 21, 31, 41 der Scheiben 20, 30, 40, somit insgesamt drei Ausnehmungen 21, 31, 41 im vorliegenden Ausführungsbeispiel, bilden gemeinsam einen Aufnahmebereich 11 aus. Die Ausnehmungen 21, 31, 41 sind als Aussparungen, Vertiefungen, Taschen oder dergleichen ausgebildet. Die Anzahl der Ausnehmungen 21 der ersten Scheibe 20, die Anzahl der Ausnehmungen 31 der zweiten bzw. mittleren Scheibe 30 und die Anzahl der Ausnehmungen 41 der dritten Scheibe 40 sind vorzugsweise gleich, und sie sind ebenfalls vorzugsweise gleich der Anzahl der Aufnahmebereiche 11. Ferner können die Ausnehmungen 21, 31, 41 dieselbe Form und einen konstanten Abstand voneinander aufweisen.

Eine oder mehrere der Scheiben 20, 30, 40, vorzugsweise die beiden äußeren Scheiben 20, 40, sind relativ zur Anbindung 12, d.h. ebenso zur zentralen Drehwelle, fixiert. Diese fixierten Scheiben 20, 40 sind hierin auch als "Festscheiben" bezeichnet, und sie zeichnen sich dadurch aus, dass sie gegenüber der Anbindung 12 und somit gegenüber der zentralen Drehwelle in Umfangsrichtung nicht verstellbar sind.

Demgegenüber ist zumindest eine der Scheiben 20, 30, 40, vorzugsweise die mittlere Scheibe 30, gegenüber den Festscheiben 20, 40 verstellbar. Diese verstellbare Scheibe 30 ist hierin auch als "Verstellscheibe,, bezeichnet, und sie zeichnet sich dadurch aus, dass sie gegenüber den Festscheiben 20, 40 und somit gegenüber der Anbindung 12 und der zentralen Drehwelle in Umfangsrichtung verstellbar ist, zumindest um einen gewissen maximalen Verstellwinkel. Zu diesem Zweck ist die Verstellscheibe 30 vorzugsweise gleitgelagert, über ein oder mehrere, beispielsweise zehn, Gleitlager 32.

Die Verstellscheibe 30 wird über einen Verstellmechanismus 50 verstellt. Der Verstellmechanismus 50 umfasst einen rotatorischen Verstellaktuator 51, der eine Ausgabewelle 51a aufweist, fest an der Stützstruktur 13 montiert ist und vorzugsweise als Elektromotor, der die Kontrolle der Winkelposition erlaubt, realisiert ist. Insbesondere kommt hierbei ein Schrittmotor, Servomotor oder Torquemotor in Betracht. Der Verstellmechanismus 50 weist gemäß dem vorliegenden Ausführungsbeispiel ferner ein Ritzel 52, das fest mit der Ausgabewelle 51a des rotatorischen Verstellaktuators 51 verbunden ist und über diese in Drehung versetzt werden kann, sowie eine Zahnstange 53 auf, die mit dem Ritzel 52 in Zahneingriff steht und durch Drehung des Ritzels 52 translatorisch, vorzugsweise entlang eines Kreisbogens, bewegt wird. Die Zahnstange 53 wiederum ist fest an der Verstellscheibe 30 montiert, wodurch die Verstellscheibe 30 über den Verstellmechanismus 50 relativ zu den Festscheiben 20, 40 um einen Verstellwinkel verstellbar bzw. verdrehbar ist.

Der Verstellaktuator 51 wird vorzugsweise über einen Schleifring versorgt, der über dem Transportrad 10 sitzt. Der Verstellaktuator 51 kann als Servomotor realisiert sein, der eine gewünschte Winkelposition ohne Referenzfahrt wiederfindet bzw. einstellen kann. Der Verstellaktuator 51 ist vorzugsweise ohne Einhausung auf dem Transportrad 10, insbesondere an der Stützstruktur 13 befestigt. Vorzugsweise sind der Verstellaktuator 51 sowie die beteiligten Komponenten des Verstellmechanismus 50 gegenüber den eingesetzten Medien in der Vorrichtung 1 beständig. Über das Ritzel 52 an der Ausgabewelle 51a Zahnrad und die Zahnstange 53 am Transportrad 10 findet die Verstellung und die Generierung des Gegenmoments statt.

Vorzugsweise ist im Transportrad 10 ein Pneumatikzylinder vorgesehen, der eingerichtet ist, um abzusichern, insbesondere im Fall größerer Kräfte, dass keine unerwünschte Verstellung am Transportrad 10 auftritt. Eine solche Verstellsicherung, die in den Figuren nicht gezeigt ist, kann auch auf andere Weise realisiert sein und ist insbesondere im Fall hoher Geschwindigkeiten und/oder großer Behälter, beispielsweise Flaschen über 1,25 L, nützlich.

Indem die Verstellscheibe 30 relativ zu den Festscheiben 20, 40 verstellt wird, lässt sich die Größe der Aufnahmebereiche 11 verändern, wie es in der Figur 1 mit verschiedenen Behälterdurchmessern - die Zahlenwerte geben beispielhafte Behälterdurchmesser in Millimeter an - gezeigt ist.

Dadurch, dass zur Einstellung der Taschengröße, d.h. der Abmessung der Aufnahmebereiche 11 in Umfangsrichtung, die Verstellscheibe 30 relativ zu den Festscheiben 20, 40 verdreht wird, verschiebt sich die radiale Symmetrielinie der Aufnahmebereiche 11, sofern eine solche vorhanden ist. In anderen Worten, die Position der Aufnahmebereiche 11 und somit die Position eines aufgenommenen Behälters, d.h. seine Zylinderachse im Fall eines zylindrischen Behälters, verschiebt sich in Umfangsrichtung, wie es aus der Figur 1 durch die beispielhaft dargestellten Behälterdurchmesser hervorgeht. Diese Verschiebung ist hierin auch als "Teilungsversatz" bezeichnet.

Der Teilungsversatz kann, sofern erforderlich, ausgeglichen werden, vorzugsweise unter Berücksichtigung zumindest eines Maschinen- oder Prozessparameters, wie etwa eines behälterabhängigen und/oder verstellwinkelabhängigen Parameters. Diese Kompensation kann manuell erfolgen, indem das Transportrad 10 relativ zu einem stationären Bezugspunkt justiert wird.

Alternativ oder zusätzlich kann der Antrieb 2 der zentralen Drehwelle genutzt werden, um den Teilungsversatz zu korrigieren. Umfasst der Antrieb 2 einen Elektromotor, der die Kontrolle der Winkelposition erlaubt, wie etwa einen Schrittmotor, Servomotor oder Torquemotor, so ist die Korrektur in Abhängigkeit der zu transportierenden Behälter bzw. des angewendeten Verstellwinkels auf maschinenbaulich einfache und zuverlässige Weise möglich.

Zu diesem Zweck umfasst die Vorrichtung 1 vorzugsweise eine Steuerung 60, die drahtlos oder drahtgebunden mit dem zentralen Antrieb 2 und dem Verstellaktuator 51 kommuniziert. Der Verstellaktuator 51 kann nun eingerichtet sein, um den aktuellen Verstellwinkel der Verstellscheibe 30 oder eine Verstellwinkeldifferenz relativ zu einem Bezugswinkel an die Steuerung 60 zu übermitteln. Die Steuerung 60 ermittelt daraus einen Korrekturwinkel und steuert den Antrieb 2 so an, dass der Aufnahmebereich 11 um den Korrekturwinkel korrigiert wird. Alternativ kann der aktuelle Verstellwinkel von der Steuerung 60 nachverfolgt und aufgezeichnet werden, so dass eine Informationsübermittlung von dem Verstellaktuator 51 an die Steuerung 60 nicht unbedingt erforderlich ist.

Die Korrektur bzw. Kompensation des Verstellwinkels kann dahingehend weiter automatisiert werden, dass die Steuerung 60 eine Eingabe über den zu verstellenden Winkel empfängt oder ermittelt, beispielsweise aus einem oder mehreren behälterabhängigen Parametern der zu transportierenden Behälter. Behälterabhängige Parameter können Informationen über das Format, die Größe, den Durchmesser, die Geometrie und/oder dergleichen der Behälter enthalten. Die Steuerung 60 ermittelt nun daraus den Verstellwinkel und steuert den Verstellaktuator 51 und den Antrieb 2 für die Korrektur des Teilungsversatzes entsprechend an.

Gemäß einer alternativen Ausführungsvariante kann die Korrektur des Teilungsversatzes ohne Kenntnis bzw. rechnerische Nutzung des Verstellwinkels erfolgen, indem die Korrektur relativ zu einem festen Bezugspunkt vollzogen wird. Beispielsweise kann das Transportrad 10 manuell oder von der Steuereinrichtung 60 für die Korrektur so gedreht werden, dass die radiale Symmetrielinie eines Aufnahmebereichs 11 oder ein anderer geeigneter Punkt des Aufnahmebereichs 11 mit einem feststehenden Bezugspunkt am stationären Anlagenteil übereinstimmt.

Indem zur Einstellung der Taschengröße eine oder mehrere Verstellscheiben 30 relativ zu einer oder mehreren Festscheiben 20, 40 verdreht werden, wobei sowohl die Verstellscheiben 30 als auch die Festscheiben 20, 40 jeweils Ausnehmungen 21, 31, 41 aufweisen, die gemeinsam die Taschen bzw. Aufnahmebereiche 11 ausbilden, und eine Korrektur des Teilungsversatzes durchgeführt wird, kann die Mechanik zur Verstellung deutlich vereinfacht werden. Eine scherenartige mechanische Umlenkung der vom Verstellaktuator 51 bereitgestellten Kraft ist nicht länger erforderlich. Mit der Reduktion der mechanischen Komplexität gehen eine Verbesserung der Zuverlässigkeit und der Genauigkeit der Einstellung sowie eine Kostenersparnis durch weniger Komponenten einher. Die Montage der Vorrichtung 1 vereinfacht sich. Durch eine Höhenverstellung des Transportrads 10 ist die Vorrichtung 10 variabel in der Höhe und auf verschiedene Durchmesser/Formate der zu transportierenden Behälter anpassbar.

### Bezugszeichenliste

- 1: Vorrichtung zum Transportieren von Behältern
- 2: Antrieb
- 10: Transportrad
- 11: Aufnahmebereich
- 12: Zentrale Anbindung
- 13: Stützstruktur
- 20: Scheibe
- 21: Ausnehmung
- 30: Scheibe
- 31: Ausnehmung
- 32: Gleitlager
- 40: Scheibe
- 41: Ausnehmung
- 50: Verstellmechanismus
- 51: Verstellaktuator
- 51a: Ausgabewelle
- 52: Ritzel
- 53: Zahnstange
- 60: Steuerung

- U: Außenumfang
- A: Zentrale Drehachse

## Patentansprüche

1. Vorrichtung (1) zum Transportieren von Behältern, vorzugsweise in einer Getränkeabfüllanlage, mit einem Transportrad (10), das aufweist:
eine zentrale Anbindung (12), die eingerichtet ist, um das Transportrad (10) an einer zentralen Drehwelle zu befestigen, so dass eine Drehung der zentralen Drehwelle um deren Drehachse (A) auf das Transportrad (10) übertragbar ist;
mehrere Scheiben (20, 30, 40), die konzentrisch bezüglich der Drehachse (A) in Axialrichtung übereinandergestapelt sind und jeweils zumindest eine Ausnehmung (21, 31, 41) aufweisen, die gemeinsam einen Aufnahmebereich (11), der an einem Außenumfang (U) des Transportrads (10) vorgesehen und zur zumindest teilweisen Aufnahme eines Behälters eingerichtet ist, ausbilden, wobei zumindest eine der Scheiben (20, 30, 40) eine Festscheibe (20, 40) ist, die über eine Stützstruktur (13) relativ zur Anbindung (12) fixiert ist, und zumindest eine der Scheiben (20, 30, 40) eine Verstellscheibe (30) ist, die um die Drehachse (A) relativ zur Festscheibe (20, 40) drehbar gelagert ist; und
einen Verstellmechanismus (50), der eingerichtet ist, um die Verstellscheibe (30) um einen Verstellwinkel relativ zur Festscheibe (20, 40) zu drehen, wodurch die Größe des Aufnahmebereichs (11) verstellbar ist,
**dadurch gekennzeichnet, dass**
das Transportrad (10) genau drei Scheiben (20, 30, 40) mit zwei Festscheiben (20, 40) und einer Verstellscheibe (30) umfasst, wobei die Verstellscheibe (30), in Axialrichtung der Drehachse (A) gesehen, zwischen den beiden Festscheiben (20, 40) angeordnet ist.

2. Vorrichtung (1) nach Anspruch 1, **dadurch gekennzeichnet, dass** die Scheiben (20, 30, 40) eine gleiche Anzahl an Ausnehmungen (21, 31, 41) aufweisen und/oder alle Ausnehmungen (21, 31, 41) der Scheiben (20, 30, 40) dieselbe, vorzugsweise halbkreisförmige, Form aufweisen und/oder die Ausnehmungen (21, 31, 41) je Scheibe (20, 30, 40) in einem konstanten Winkelabstand angeordnet sind.

3. Vorrichtung (1) nach einem der vorigen Ansprüche, **dadurch gekennzeichnet, dass** der Verstellmechanismus (50) einen rotatorischen Verstellaktuator (51) aufweist, der fest an der Stützstruktur (13) montiert ist, wobei der Verstellaktuator (51) einen Elektromotor mit einer Ausgabewelle (51a) umfasst, der die Kontrolle der Winkelposition der Ausgabewelle (51a) erlaubt, wobei der Elektromotor vorzugsweise ein Schrittmotor, Servomotor oder Torquemotor ist.

4. Vorrichtung (1) nach Anspruch 3, **dadurch gekennzeichnet, dass** ein Schleifring vorgesehen ist, der den Elektromotor des Verstellaktuators (51) mit Strom versorgt.

5. Vorrichtung (1) nach Anspruch 3 oder 4, **dadurch gekennzeichnet, dass** der Verstellmechanismus (50) ein Ritzel (52), das fest mit der Ausgabewelle (51a) des rotatorischen Verstellaktuators (51) verbunden und über diese in Drehung versetzbar ist, sowie eine Zahnstange (53) aufweist, die mit dem Ritzel (52) in Zahneingriff steht und durch Drehung des Ritzels (52) translatorisch, vorzugsweise entlang eines Kreisbogens, bewegbar ist, wobei die Zahnstange (53) fest an der Verstellscheibe (30) montiert ist.

6. Vorrichtung (1) nach einem der vorigen Ansprüche, **dadurch gekennzeichnet, dass** das Transportrad (10) so eingerichtet ist, dass ein durch Drehung der Verstellscheibe (30) relativ zur Festscheibe (20, 40) um den Verstellwinkel verursachter Teilungsversatz manuell und/oder automatisch kompensierbar ist.

7. Vorrichtung (1) nach einem der vorigen Ansprüche, **dadurch gekennzeichnet, dass** diese ferner einen Antrieb (2) aufweist, der eingerichtet ist, um die zentrale Drehwelle in Rotation zu versetzen, wobei der Antrieb (2) ein Elektromotor ist, der die Kontrolle der Winkelposition der zentralen Drehwelle erlaubt, vorzugsweise ein Schrittmotor, Servomotor oder Torquemotor.

8. Vorrichtung (1) nach Anspruch 6 und 7, **dadurch gekennzeichnet, dass** der Antrieb (2) eingerichtet ist, um den Teilungsversatz zu kompensieren.

9. Vorrichtung (1) nach Anspruch 8, **dadurch gekennzeichnet, dass** diese eine Steuerung (60) aufweist, die mit dem Antrieb (2) sowie dem Verstellmechanismus (50) in Kommunikation steht und eingerichtet ist, um den Verstellmechanismus (50) so anzusteuern, dass die Verstellscheibe (30) um den Verstellwinkel relativ zur Festscheibe (20, 40) gedreht wird, und um den Antrieb (2) so anzusteuern, dass der dadurch verursachte Teilungsversatz kompensiert wird.

10. Vorrichtung (1) nach Anspruch 9, **dadurch gekennzeichnet, dass** die Steuerung (60) eingerichtet ist, um aus dem Verstellwinkel einen Korrekturwinkel zu ermitteln und den Antrieb (2) so anzusteuern, dass die Position des Aufnahmebereichs (11) am Außenumfang (U) um den Korrekturwinkel korrigiert wird.

11. Vorrichtung (1) nach Anspruch 9 oder 10, **dadurch gekennzeichnet, dass** die Steuerung (60) eingerichtet ist, um eine Eingabe über den Verstellwinkel zu empfangen oder diesen zu ermitteln, vorzugsweise aus einem oder mehreren Prozess- und/oder Maschinenparametern und/oder behälterabhängigen Parametern, und den Verstellmechanismus (50) entsprechend anzusteuern, so dass die Verstellscheibe (30) um den Verstellwinkel relativ zur Festscheibe (20, 40) gedreht wird.

12. Verfahren zum Transportieren von Behältern, vorzugsweise in einer Getränkeabfüllanlage, mittels einer Vorrichtung (1) nach einem der vorigen Ansprüche, wobei das Verfahren aufweist:
Übergeben eines Behälters an den Aufnahmebereich (11) des Transportrads (10), Transportieren des Behälters entlang einer Kreisbahn durch Drehen des Transportrads (10) um die Drehachse (A) und Entnehmen des Behälters aus dem Aufnahmebereich (11);
Drehen der Verstellscheibe (30) um einen Verstellwinkel relativ zur Festscheibe (20, 40), um die Größe des Aufnahmebereichs (11) zu verstellen.

13. Verfahren nach Anspruch 12, **dadurch gekennzeichnet, dass** ein durch Drehung der Verstellscheibe (30) relativ zur Festscheibe (20, 40) um den Verstellwinkel verursachter Teilungsversatz manuell und/oder automatisch kompensiert wird, vorzugsweise indem das Transportrad (10) insgesamt in einer dem Verstellwinkel entgegengesetzten Richtung um einen Korrekturwinkel gedreht wird.

14. Verfahren nach Anspruch 13, **dadurch gekennzeichnet, dass** der Transport von Behältern mittels eines Transportrads (10) gemäß den Ansprüchen 6 und 7 durchgeführt wird und die Kompensation des Teilungsversatzes über den Antrieb (2) durchgeführt wird, vorzugsweise indem das Transportrad (10) insgesamt von dem Antrieb (2) in einer dem Verstellwinkel entgegengesetzten Richtung um den Korrekturwinkel gedreht wird.

## Claims

1. Device (1) for transporting containers, preferably in a beverage filling system, comprising a transport wheel (10), which comprises:
a central connection (12) which is configured to fasten the transport wheel (10) to a central rotational shaft, so that a rotation of the central rotational shaft about the axis of rotation (A) thereof is able to be transmitted to the transport wheel (10);
multiple discs (20, 30, 40) which are concentrically stacked on top of the other relative to the axis of rotation (A) in the axial direction and which in each case have at least one recess (21, 31, 41), which jointly form a receiving region (11) which is provided on an outer circumference (U) of the transport wheel (10) and which is configured to receive at least partially a container, wherein at least one of the discs (20, 30, 40) is a fixed disc (20, 40) which is fixed via a supporting structure (13) relative to the connection (12), and at least one of the discs (20, 30, 40) is an adjustment disc (30) which is rotatably mounted about the axis of rotation (A) relative to the fixed disc (20, 40); and
an adjustment mechanism (50) which is configured to rotate the adjustment disc (30) by an adjustment angle relative to the fixed disc (20, 40), whereby the size of the receiving region (11) is adjustable,
**characterized in that**
the transport wheel (10) comprises exactly three discs (20, 30, 40) having two fixed discs (20, 40) and an adjustment disc (30), wherein the adjustment disc (30), when viewed in the axial direction of the axis of rotation (A), is arranged between the two fixed discs (20, 40).

2. Device (1) according to claim 1, **characterized in that** the discs (20, 30, 40) have an equal number of recesses (21, 31, 41) and/or all recesses (21, 31, 41) of the discs (20, 30, 40) have the same, preferably semi-circular, shape and/or the recesses (21, 31, 41) of one relevant disc (20, 30, 40) are arranged at a uniform angular spacing.

3. Device (1) according to either of the preceding claims, **characterized in that** the adjustment mechanism (50) has a rotary adjustment actuator (51) which is fixedly mounted on the supporting structure (13), wherein the adjustment actuator (51) comprises an electric motor having an output shaft (51a) which allows control of the angular position of the output shaft (51a), wherein the electric motor is preferably a step motor, servomotor or torque motor.

4. Device (1) according to claim 3, **characterized in that** a slip ring, which supplies the electric motor of the adjustment actuator (51) with power, is provided.

5. Device (1) according to either claim 3 or claim 4, **characterized in that** the adjustment mechanism (50) has a pinion (52) which is fixedly connected to the output shaft (51a) of the rotary adjustment actuator (51) and is able to be set in rotation thereby, as well as a toothed rod (53) which is in toothed engagement with the pinion (52) and which by rotating the pinion (52), is movable in a translational manner, preferably along a circular arc, wherein the toothed rod (53) is fixedly mounted on the adjustment disc (30).

6. Device (1) according to any of the preceding claims, **characterized in that** the transport wheel (10) is configured such that a pitch offset, caused by rotating the adjustment disc (30) relative to the fixed disc (20, 40) by the adjustment angle, may be manually and/or automatically compensated.

7. Device (1) according to any of the preceding claims, **characterized in that** the device further comprises a drive (2) which is configured to set the central rotational shaft in rotation, wherein the drive (2) is an electric motor, preferably a step motor, servomotor or torque motor, which allows control of the angular position of the central rotational shaft.

8. Device (1) according to claims 6 and 7, **characterized in that** the drive (2) is configured to compensate for the pitch offset.

9. Device (1) according to claim 8, **characterized in that** this device has a controller (60) which is in communication with the drive (2) as well as the adjustment mechanism (50) and which is configured to activate the adjustment mechanism (50) such that the adjustment disc (30) is rotated by the adjustment angle relative to the fixed disc (20, 40), and to activate the drive (2) such that the pitch offset caused thereby is compensated.

10. Device (1) according to claim 9, **characterized in that** the controller (60) is configured to determine a correction angle from the adjustment angle and to activate the drive (2) such that the position of the receiving region (11) on the outer circumference (U) is corrected by the correction angle.

11. Device (1) according to either claim 9 or claim 10, **characterized in that** the controller (60) is configured to receive an input relative to the adjustment angle or to determine this adjustment angle, preferably from one or more process and/or machine parameters and/or container-dependent parameters, and to activate the adjustment mechanism (50) correspondingly such that the adjustment disc (30) is rotated relative to the fixed disc (20, 40) by the adjustment angle.

12. Method for transporting containers, preferably in a beverage filling system, by means of a device (1) according to any of the preceding claims, wherein the method comprises:
transferring a container to the receiving region (11) of the transport wheel (10), transporting the container along a circular track by rotating the transport wheel (10) about the axis of rotation (A) and removing the container from the receiving region (11);
rotating the adjustment disc (30) by an adjustment angle relative to the fixed disc (20, 40) in order to adjust the size of the receiving region (11).

13. Method according to claim 12, **characterized in that** a pitch offset, caused by rotating the adjustment disc (30) relative to the fixed disc (20, 40) by the adjustment angle, is manually and/or automatically compensated, preferably by the transport wheel (10) being rotated as a whole by a correction angle in a direction opposite to the adjustment angle.

14. Method according to claim 13, **characterized in that** the transport of containers by means of a transport wheel (10) is carried out according to claims 6 and 7, and the compensation of the pitch offset is carried out via the drive (2), preferably by the transport wheel (10) being rotated as a whole by the drive (2) by the correction angle in a direction opposite to the adjustment angle.

## Revendications

1. Dispositif (1) permettant de transporter des récipients, de préférence dans une installation de remplissage de boissons, comportant une roue de transport (10) qui présente :
un moyen de liaison (12) central qui est conçu pour fixer la roue de transport (10) à un arbre rotatif central, de sorte qu'une rotation de l'arbre rotatif central autour de son axe de rotation (A) peut être transmise à la roue de transport (10) ;
plusieurs disques (20, 30, 40) qui sont empilés les uns sur les autres de manière concentrique par rapport à l'axe de rotation (A) dans la direction axiale et qui présentent respectivement au moins un évidement (21, 31, 41) qui forment ensemble une zone de réception (11) prévue sur une circonférence extérieure (U) de la roue de transport (10) et conçue pour recevoir au moins partiellement un récipient, dans lequel au moins l'un des disques (20, 30, 40) est un disque fixe (20, 40) qui est fixé par rapport au moyen de liaison (12) par l'intermédiaire d'une structure de support (13), et au moins l'un des disques (20, 30, 40) est un disque réglable (30) qui est monté de manière à pouvoir tourner autour de l'axe de rotation (A) par rapport au disque fixe (20, 40) ; et
un mécanisme de réglage (50) qui est conçu pour faire tourner le disque réglable (30) d'un angle de réglage par rapport au disque fixe (20, 40), moyennant quoi la taille de la zone de réception (11) peut être réglée,
**caractérisé en ce que**
la roue de transport (10) comprend exactement trois disques (20, 30, 40) avec deux disques fixes (20, 40) et un disque réglable (30), dans lequel le disque réglable (30), vu dans la direction axiale de l'axe de rotation (A), est disposé entre les deux disques fixes (20, 40).

2. Dispositif (1) selon la revendication 1, **caractérisé en ce que** les disques (20, 30, 40) présentent un même nombre d'évidements (21, 31, 41) et/ou tous les évidements (21, 31, 41) des disques (20, 30, 40) présentent la même forme, de préférence semi-circulaire, et/ou les évidements (21, 31, 41) de chaque disque (20, 30, 40) sont disposés à une distance angulaire constante.

3. Dispositif (1) selon l'une des revendications précédentes, **caractérisé en ce que** le mécanisme de réglage (50) présente un actionneur de réglage (51) rotatif monté de manière fixe sur la structure de support (13), dans lequel l'actionneur de réglage (51) comprend un moteur électrique comportant un arbre de sortie (51a), lequel moteur électrique permet le contrôle de la position angulaire de l'arbre de sortie (51a), dans lequel le moteur électrique est de préférence un moteur pas à pas, un servomoteur ou un moteur couple.

4. Dispositif (1) selon la revendication 3, **caractérisé en ce qu'**une bague collectrice est prévue, laquelle alimente en courant le moteur électrique de l'actionneur de réglage (51).

5. Dispositif (1) selon la revendication 3 ou 4, **caractérisé en ce que** le mécanisme de réglage (50) présente un pignon (52) qui est relié de manière fixe à l'arbre de sortie (51a) de l'actionneur de réglage (51) rotatif et peut être entraîné en rotation par l'intermédiaire de celui-ci, ainsi qu'une crémaillère (53) qui est en prise par engrènement avec le pignon (52) et qui peut être déplacée en translation, de préférence le long d'un arc de cercle, par rotation du pignon (52), dans lequel la crémaillère (53) est montée de manière fixe sur le disque réglable (30).

6. Dispositif (1) selon l'une des revendications précédentes, **caractérisé en ce que** la roue de transport (10) est conçue de sorte qu'un décalage de pas provoqué par la rotation du disque réglable (30) par rapport au disque fixe (20, 40) de l'angle de réglage peut être compensé manuellement et/ou automatiquement.

7. Dispositif (1) selon l'une des revendications précédentes, **caractérisé en ce qu'**il présente en outre un entraînement (2) qui est conçu pour entraîner l'arbre rotatif central en rotation, dans lequel l'entraînement (2) est un moteur électrique qui permet le contrôle de la position angulaire de l'arbre rotatif central, de préférence un moteur pas à pas, un servomoteur ou un moteur couple.

8. Dispositif (1) selon les revendications 6 et 7, **caractérisé en ce que** l'entraînement (2) est conçu pour compenser le décalage de pas.

9. Dispositif (1) selon la revendication 8, **caractérisé en ce qu'**il présente un appareil de commande (60) qui est en communication avec l'entraînement (2) ainsi qu'avec le mécanisme de réglage (50) et qui est configuré pour commander le mécanisme de réglage (50) de sorte que le disque réglable (30) est tourné de l'angle de réglage par rapport au disque fixe (20, 40), et pour commander l'entraînement (2) de sorte que le décalage de pas ainsi provoqué est compensé.

10. Dispositif (1) selon la revendication 9, **caractérisé en ce que** l'appareil de commande (60) est configuré pour déterminer un angle de correction à partir de l'angle de réglage et pour commander l'entraînement (2) de sorte que la position de la zone de réception (11) au niveau de la circonférence extérieure (U) est corrigée de l'angle de correction.

11. Dispositif (1) selon la revendication 9 ou 10, **caractérisé en ce que** l'appareil de commande (60) est configuré pour recevoir une entrée concernant l'angle de réglage ou pour le déterminer, de préférence à partir d'un ou de plusieurs paramètres de processus et/ou de machine et/ou de paramètres dépendant du récipient, et pour commander le mécanisme de réglage (50) en conséquence, de sorte que le disque réglable (30) est tourné de l'angle de réglage par rapport au disque fixe (20, 40).

12. Procédé permettant de transporter des récipients, de préférence dans une installation de remplissage de boissons, au moyen d'un dispositif (1) selon l'une des revendications précédentes, dans lequel le procédé présente :
le transfert d'un récipient vers la zone de réception (11) de la roue de transport (10), le transport du récipient le long d'une trajectoire circulaire en faisant tourner la roue de transport (10) autour de l'axe de rotation (A) et le retrait du récipient de la zone de réception (11) ;
la rotation du disque réglable (30) d'un angle de réglage par rapport au disque fixe (20, 40) afin de régler la taille de la zone de réception (11).

13. Procédé selon la revendication 12, **caractérisé en ce qu'**un décalage de pas provoqué par la rotation du disque réglable (30) par rapport au disque fixe (20, 40) de l'angle de réglage est compensé manuellement et/ou automatiquement, de préférence en faisant tourner la roue de transport (10) dans son ensemble d'un angle de correction dans une direction opposée à l'angle de réglage.

14. Procédé selon la revendication 13, **caractérisé en ce que** le transport de récipients est effectué au moyen d'une roue de transport (10) conformément aux revendications 6 et 7 et la compensation du décalage de pas est effectuée par l'intermédiaire de l'entraînement (2), de préférence en faisant tourner la roue de transport (10) dans son ensemble de l'angle de correction dans une direction opposée à l'angle de réglage au moyen de l'entraînement (2).
